# EUROPEAN PATENT APPLICATION

(11) **EP 1 420 108 A1**
(43) Date of publication of application: **19.05.2004**
(21) Application number: 03022903.3
(22) Date of filing: 09.10.2003
(51) Int. Cl.: D21B 1/12

(54) **Apparatus and method for comminuting papermaking raw material**

(30) Priority: 15.11.2002 JP 2002331928; 11.04.2003 JP 2003107212
(71) Applicant: AIKAWA IRON WORKS CO., LTD., Shizuoka 420 (JP)
(72) Inventor: Aikawa, Yoshihiko, 191 Yunoki Shizuoka (JP)
(74) Representative: Marx, Lothar, Dr.

(57) **Abstract**

A dissociating apparatus (A) of papermaking raw material includes a rotary drum (1) for receiving the papermaking raw material therein. The rotary drum (1) has an engaging portion (16) on an inner wall (17) thereof for engaging the papermaking raw material. The dissociating apparatus (A) also includes a rotary vane (3) disposed inside the rotary drum (1) for hitting the papermaking raw material falling from the engaging portion (16). In a method of dissociating the papermaking raw material, the raw material on the rotary drum is hit by the rotary vane to collide with the inner surface of the rotary drum, and falls on a bottom surface of the rotary drum to collide therewith. Thus, the raw material is properly dissociated.

## Description

### Background of the Invention and Related Art Statement

The present invention relates to a dissociating apparatus of a papermaking raw material and a method for dissociating the papermaking raw material and, in particular, to a dissociating or disaggregating apparatus of a papermaking raw material and a method for dissociating or disaggregating the papermaking raw material with high efficiency.

When a papermaking raw material such as waste paper and used cardboard is processed to produce recycle paper, a processing factory generally receives the papermaking raw material compressed by a press or the like. Therefore, it is necessary to break down the compressed papermaking raw material into small pieces using a bale breaker or the like. Then, the broken-down raw material is introduced into a rotary drum, and water is sprayed onto the papermaking raw material in the rotary drum. The rotary drum has projections on an inner wall thereof for combing up the papermaking raw material while rotating so that the papermaking raw material is gradually dissociated.

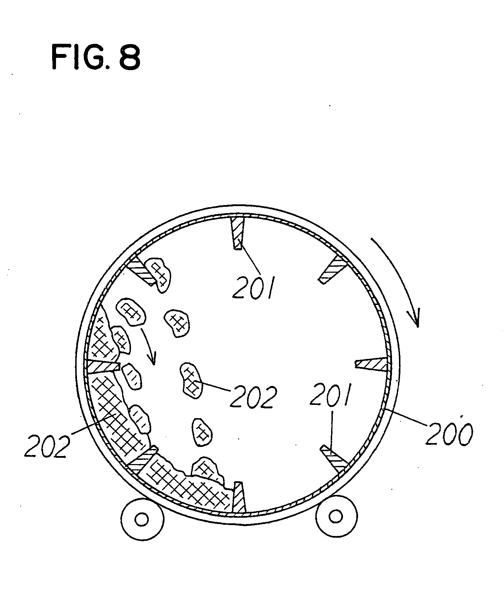

Fig. 8 is a view showing such a dissociating apparatus of a papermaking raw material described above. As shown in Fig. 8, a rotary drum 200 is provided with engaging portions (projections) 201 on an inner wall thereof for combing up the papermaking raw material 202 while rotating so that the papermaking raw material 202 is gradually dissociated through free falling. Accordingly, it takes long time to dissociate the papermaking raw material 202, thereby decreasing efficiency. To improve the efficiency, it is necessary to form the rotary drum 200 large, thereby limiting an installation area to a large space.

In view of the above problems, the present invention has been made, and an object of the invention is to provide a dissociating apparatus of papermaking raw material and a method for dissociating the papermaking raw material with high efficiency.

Further objects and advantages of the invention will be apparent from the following description of the invention.

### Summary of the Invention

According to the first aspect of the present invention, a dissociating apparatus of a papermaking raw material includes a rotary drum rotatably and laterally arranged for receiving the papermaking raw material therein and having engaging portions formed on an inner surface thereof. The engaging portions engage the papermaking raw material to carry the papermaking raw material from a bottom side to an upper side inside the rotary drum upon rotation of the rotary drum. The apparatus also include a rotary vane rotatably situated inside the rotary drum to extend along the rotary drum. The rotary vane hits the papermaking raw material falling from the engaging portions upon rotation of the rotary drum.

According to the second aspect of the present invention, a method for dissociating a papermaking raw material comprises providing the papermaking raw material in a rotary drum disposed horizontally and having engaging portions on an inner surface thereof, rotating the rotary drum so that the papermaking raw material located at a lower side of the rotary drum engages the engaging portions to be transferred to an upper side of the rotary drum, and falls from the engaging portions, and rotating a rotary vane disposed inside the rotary drum to hit the papermaking raw material falling from the engaging portions. Thus, the papermaking raw material collides with the inner wall of the rotary dram and falls on a bottom of the inner surface of the rotary drum to be dissociated.

According to the third aspect of the present invention, in the dissociating apparatus of the first aspect, the rotary drum includes a receiving portion or opening for receiving the papermaking raw material at one end thereof. The rotary drum also includes a plurality of first openings as a discharging portion in a sidewall thereof at a side closer to the other end of the rotary drum than the one end for discharging the papermaking raw material from the rotary drum. The rotary drum is formed of an elongated body having a distance between the receiving portion and the discharging portion longer than a diameter of the first rotary drum. The rotary drum is disposed such that a longitudinal direction of the elongated body is aligned along a horizontal direction and the discharging portion is positioned lower than the receiving portion. An agitator agitates the papermaking raw material with water in advance, and a transferring device transfers the papermaking raw material containing the water to the receiving portion.

According to the fourth aspect of the present invention, in the dissociating apparatus of the first aspect, the engaging portion formed on the inner surface of the rotary drum includes a feeding blade for feeding the papermaking raw material from the receiving portion to the discharging portion.

According to the fifth aspect of the present invention, in the dissociating apparatus in the third and fourth aspects, a water supplying device is further included for supplying water to the papermaking raw material at the discharging portion of the rotary drum.

According to the sixth aspect of the present invention, the dissociating apparatus in the third and fourth aspects, a projecting portion projecting outwardly is further provided on the inner wall of the first rotary drum between the rotary vane and the discharging portion.

According to the seventh aspect of the present invention, the dissociating apparatus in the first aspect further includes a screening device for receiving the papermaking raw material discharged through the discharging portion. The screening device includes an agitating member for agitating the papermaking raw material with water and a screen with a plurality of second openings. The second openings have sizes smaller than those of the first openings so that the papermaking material passing through the second openings is discharged from the screening device.

According to the eighth aspect of the present invention, the dissociating apparatus in the seventh aspect further includes another rotary drum having a plurality of third openings in a sidewall thereof for receiving the papermaking raw material not passing through the screening device so that a foreign material is separated from the papermaking raw material. The third openings of the second rotary drum have sizes smaller than those of the first openings and larger than those of the second openings. The papermaking raw material passes through the third openings of the second rotary drum, and is guided to a primary chamber of the screen, i.e. a receiving side of the screening device.

According to the ninth aspect of the present invention, in the dissociating apparatus in the first aspect, a cylindrical side surface covering member facing and covering the side surface of the rotary drum is further provided at a side closer to the other end of the first rotary drum than the one of the rotary drum. The cylindrical side surface covering member has a closed end at a side closer to the other end of the first rotary drum, and an open end opposite to the closed end. The side surface covering member includes a plurality of side surface covering member openings having sizes smaller than those of the first openings. A feeding member is provided on one of the surface covering member and the side surface of the rotary drum in the side surface covering member. The feeding member is formed in a substantially spiral shape, and feeds the papermaking raw material passing through the first openings toward the open end of the side surface covering member. Further, a water supplying device is disposed in the rotary drum for supplying water.

### Brief Description of the Drawings

Fig. 1 is a partial sectional view of a dissociating apparatus of a papermaking raw material according to an embodiment of the present invention;
Fig. 2 is a schematic sectional view of the dissociating apparatus of the papermaking raw material taken along line 2-2 in Fig. 1;
Fig. 3 is a schematic sectional view of the dissociating apparatus of the papermaking raw material taken along line 3-3 in Fig. 1;
Fig. 4 is a partial sectional view in a state where auxiliary devices are attached to a receiving portion and a discharging portion of the dissociating apparatus of the papermaking raw material shown in Fig. 1;
Fig. 5 is a partially enlarged sectional view showing the receiving portion of the dissociating apparatus of the papermaking raw material shown in Fig. 4;
Fig. 6 is a partially enlarged sectional view showing the discharging portion of the dissociating apparatus of the papermaking raw material shown in Fig. 4;
Fig. 7 is a partial sectional view of the dissociating apparatus of the papermaking raw material according to a modified embodiment of the present invention;
Fig. 8 is a schematic sectional view of a conventional dissociating apparatus of the papermaking raw material;
Fig. 9 is a schematic sectional view of the dissociating apparatus of the papermaking raw material according to a further modified embodiment of the present invention; and
Fig. 10 is a schematic sectional view of the dissociating apparatus of the papermaking raw material according to a still further modified embodiment of the present invention.

### Detailed Description of Preferred Embodiment

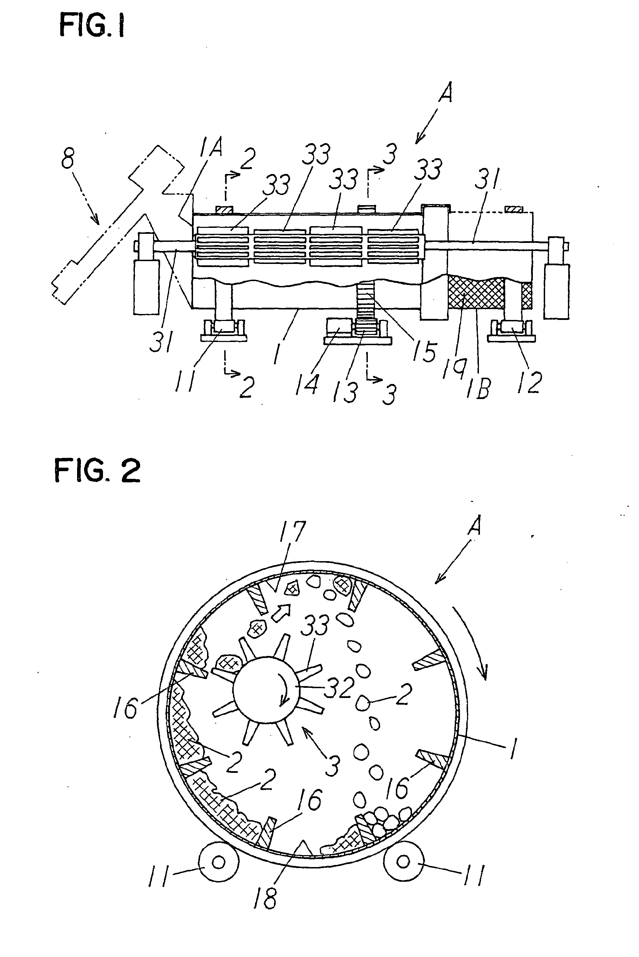

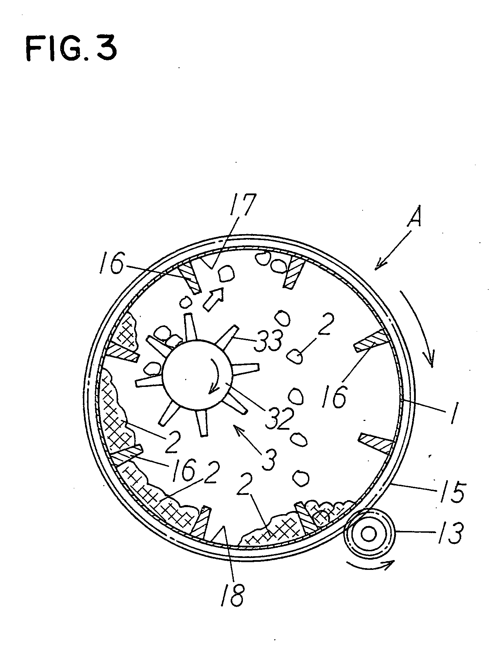

Hereunder, embodiments of the invention will be described with reference to the accompanying drawings. In Figs. 1 through 6, a dissociating apparatus A of a papermaking raw material includes a rotary drum 1 rotatably supported by a pair of supporting rollers or gears 11, 12 and a driving roller or gear 13. A motor 14 drives the driving roller 13, and an engaging portion 15 is provided on an outer periphery of the rotating drum 1 for engaging the driving roller 13. As shown in Figs. 1 and 3, the driving roller 13 is rotated in the counterclockwise direction, and the rotating drum 1 is slowly rotated at a speed of, for example, 10 - 20 rpm in the clockwise direction.

The rotary drum 1 includes engaging portions 16 such as projections for engaging the papermaking raw material 2 received inside the rotary drum 1. A rotary vane 3 is disposed inside the rotary drum 1 for hitting the papermaking raw material 2 falling from the engaging portions 16. The rotary vane 3 has a rotational center located inside the rotary drum 1, for example, at a position above a center of the rotary drum 1 and shifted from a vertical line passing through the center of the rotary drum 1. The rotary vane 3 includes a core portion 32 attached to a rotating shaft 31 rotatably supporting both ends of the rotary drum 1 and blades 33 provided on an outer periphery of the core portion 32. As shown in Figs. 2 and 3, the rotary vane 3 rotates in a direction same as that of the rotary drum 1, i.e. the clockwise direction, for hitting the papermaking raw material 2 at a rotating speed higher than that of the rotary drum 1, for example, 100 - 400 rpm, preferably 100 - 200 rpm.

As shown in Figs. 2 and 3, when the rotary drum 1 rotates, the papermaking raw material 2 engaging the engaging portions 16 falls and is hits by the rotary vane 3. As a result, the papermaking raw material 2 receives large impact, thereby increasing efficiency of dissociating the papermaking raw material 2.

When the rotary drum 1 rotates, the papermaking raw material 2 engaging the engaging portions 16 formed on an inner wall 17 of the rotary drum 1 falls, and the rotary vane 3 disposed inside the rotary drum 1 hits the papermaking raw material 2 so that the papermaking raw material 2 collides with the inner wall 17 of the rotary drum 1. Accordingly, the papermaking raw material 2 falls and hits a bottom portion 18 of the inner wall 17 of the rotary drum 1, so that the papermaking raw material 2 is further dissociated. The papermaking raw material 2 receives the impact through hitting by the rotary vane 3, colliding with the inner wall 17 of the rotary drum 1, and hitting with the bottom portion 18 of the inner wall 17 of the rotary drum 1. The rotary vane 3 hits the papermaking raw material 2 upwardly, so that the papermaking raw material 2 falls from a higher position, thereby increasing the impact applied to the papermaking raw material 2 and the efficiency of dissociating the papermaking raw material 2.

As shown in Figs. 1 and 4-6, the rotary drum 1 has an opening at one end thereof as a receiving portion 1A for receiving the papermaking raw material 2. A plurality of first openings 19 is formed in a side surface of the rotary drum 1 close to the other end thereof, and the first openings 19 constitute a discharge portion 1B for discharging the papermaking raw material 2 from the rotary drum 1. The rotary drum 1 is formed of an elongated body having a length between the receiving portion 1A and the discharging portion 1B longer than a diameter thereof. The elongated body is located such that a longitudinal direction of the long member is aligned in the horizontal direction and the discharging portion 1B is located lower than the receiving portion 1A. Therefore, when the rotary drum 1 rotates, the papermaking raw material 2 received through the receiving portion 1A is transferred to the discharging portion 1B. Incidentally, the engaging portions 16 provided on the inner wall 17 of the rotary drum 1 may be formed of feeding blades (not shown) having, for example, a spiral shape for feeding the papermaking raw material 2 from the receiving portion 1A to the discharging portion 1B.

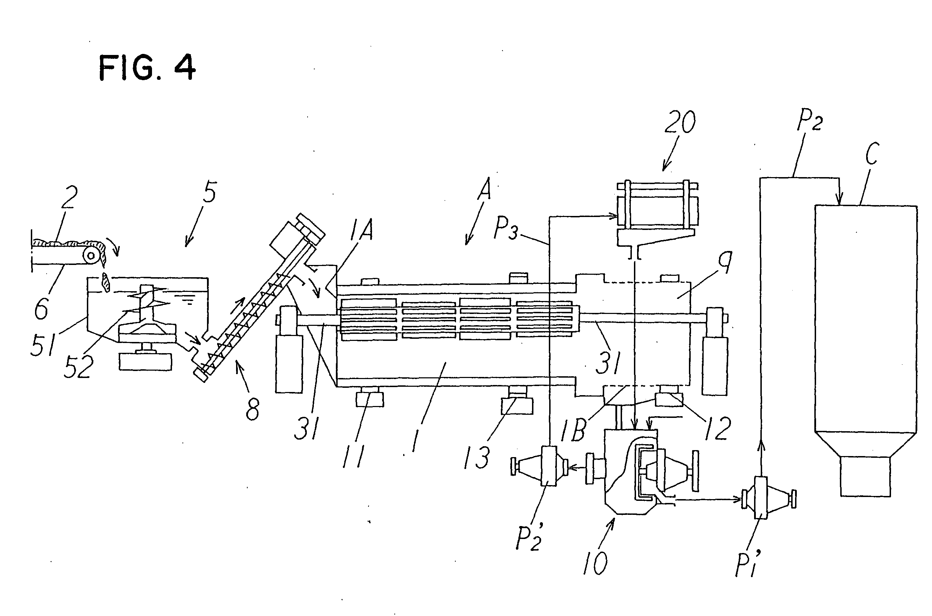

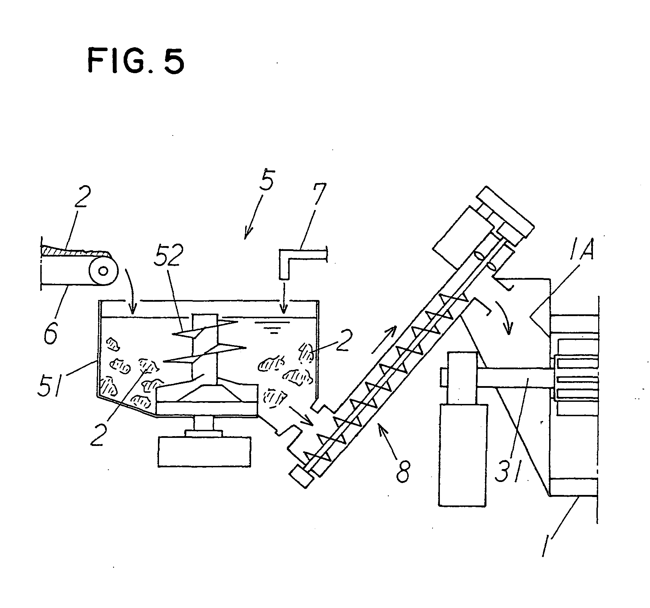

It is preferable that the papermaking raw material 2 received at the receiving portion 1A contains water. For this purpose, an agitator 5 for agitating the papermaking raw material 2 with water is provided as a pre-processing machine of the dissociating apparatus A of papermaking raw material (refer to Figs. 4 and 5). The agitator 5 agitates the papermaking raw material with water, and is formed of, for example, a pulper. The papermaking raw material 2 compressed by a press or the like and water are introduced into a tank 51 of the pulper 5 through a conveyer 6 and a water distributing pipe 7, respectively. An impeller 52 agitates the papermaking raw material 2 with water, so that the papermaking raw material 2 contains sufficient water. The papermaking raw material 2 in the agitator 5 absorbs sufficient water, and a transferring device 8 such as a screw conveyer transfers the papermaking raw material 2 to the receiving portion 1A.

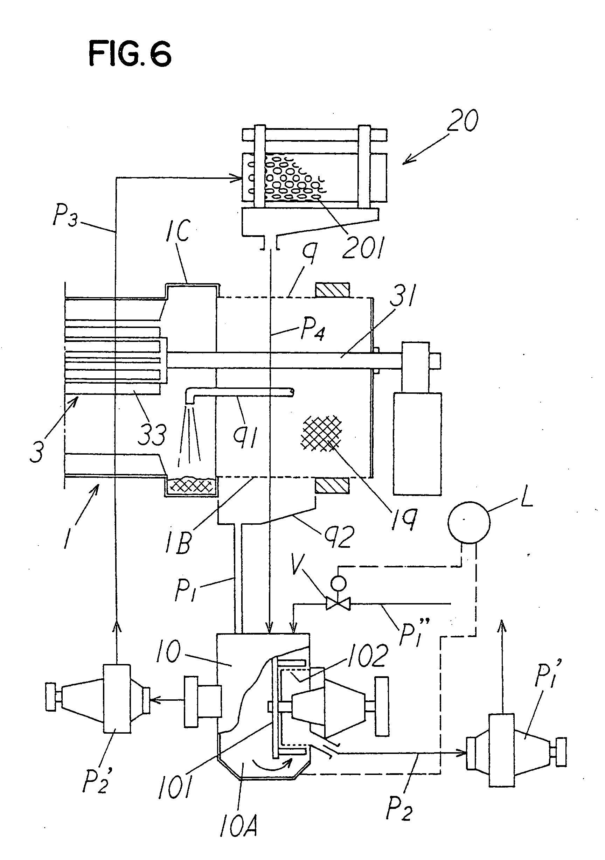

As shown in Fig. 6, a projecting portion 1C extending outwardly from the sidewall of the rotary drum 1 is provided between the rotary vane 3 and the plural openings 19. A water supplying device 91 for supplying water in the projecting portion 1C is disposed in the rotary drum 1, so that water is supplied to the papermaking material 2 located in the projecting portion 1C through the water supplying device 91 to thereby dilute the papermaking raw material 2. As a result, the papermaking raw material 2 dissociated in the rotary drum 1 is positioned in the projecting portion 1C, and water is supplied to the papermaking raw material 2 located in the projecting portion 1C through the water supplying device 91 so that the papermaking raw material 2 is diluted. Thus, it is possible to effectively separate foreign materials from good fibers at the first openings 19 through dissociating the papermaking raw material 2 by the rotary drum 1 and diluting the papermaking raw material 2.

A screening device 10 receives the papermaking raw material 2 discharged from the discharging portion 1B (passing through the first openings 19). The screening device 10 includes an agitating member 101 for agitating the papermaking raw material 2 with water, and a screen having a plurality of second openings 102.

The papermaking raw material 2 passing through the first openings 19 is guided to a primary chamber 10A of the screen at a receiving side of the screening device 10 through a receiving vessel 92 and a passage P₁. Water is guided to the primary chamber 10A of the screen through the passage P₁". A valve V is disposed in the middle of the passage P₁". A liquid surface level controller L controls opening and closing of the valve V so that a liquid surface in the screening device 10 stays constant through a sensor (not shown) provided in the screening device 10. The second openings 102 have sizes (for example, a diameter of 2.5 mm - 3 mm) smaller than those (for example, a diameter of 30 mm - 50 mm) of the first openings 19.

The first openings 19 remove large foreign materials, thereby preventing the large foreign materials from entering the agitating member 101 of the screening device 10. The papermaking raw material 2 passing through the second openings 102 is discharged outside the screening device 10 as processed raw material. The processed raw material to be discharged outside the screening device 10 is, for example, guided to a chest C through a passage P₂ connecting the screening device 10 and the chest C. A pump P₁' is disposed in the passage P₂.

A part of the papermaking raw material 2 does not pass through the screening device 10, and is guided to the second rotary drum 20 through a passage P₃ connecting the screening device 10 and the second rotary dram 20. A non-blocking pump P₂' is disposed in the middle of the passage P₃.

The second rotary drum 20 receives the part of the papermaking raw material 2 that does not pass through the screening device 10. The second rotary drum 20 includes a plurality of the third openings 201 formed in a sidewall thereof for separating foreign materials from the part of the papermaking raw material 2. The third openings 201 of the second rotary drum 20 have sizes (for example, a diameter of 4 mm - 5 mm) smaller than those (for example, a diameter of 30 mm - 50 mm) of the first openings 19, and larger than those (for example, a diameter of 2.5 mm - 3 mm) of the second openings 102. The papermaking raw material 2 passing through the third openings 201 of the second rotary drum 20 is guided to the primary chamber 10A of the screen at the receiving side of the screening device 10 through a passage P₄. The passage P₄ has one end facing the third openings 201 and the other end connected to the screening device 10. Accordingly, the part of the papermaking raw material 2 that does not pass through the screening device 10 is allowed to pass through the third openings 201 of the second rotary drum 20 and pass through the screening device 10 to thereby obtain more fibers from the papermaking raw material 2.

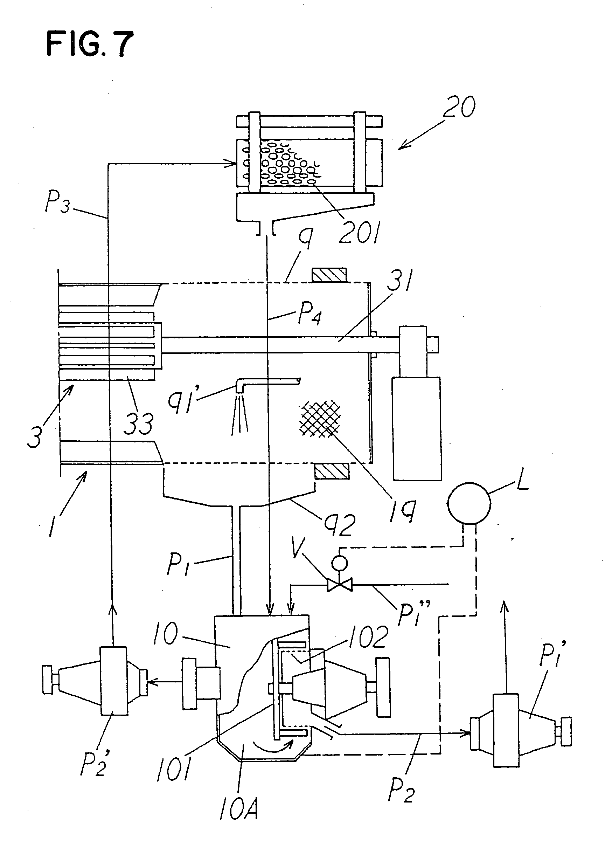

In the embodiment described above, as shown in Fig. 6, the projecting portion 1C is provided between the rotary vane 3 and the plural openings 19. Alternatively, as shown in Fig. 7, a water supplying device 91' may be disposed in the rotary drum 1 instead of the projecting portion 1C for supplying water to the papermaking raw material 2 at the position where the discharging portion 1B is disposed. In this case, in the same manner as in the embodiments described above, the rotary drum 1 dissociates the papermaking raw material 2 with water in addition to dissociating through the rotary vane 3. Moreover, the good fibers pass through the first openings 19 and the large foreign materials in the papermaking raw material 2 do not pass therethrough, so that the discharging portion 1B also functions as a screening zone. In Fig. 7, the same reference symbols are assigned to the same components or parts as those in Fig. 6, and description thereof are partially omitted.

In the embodiment as described above, the first openings 19 are formed in the side surface of the rotary drum 1 at the side close to the other end of the rotary drum 1, and constitute the discharging portion for discharging the papermaking raw material in the rotary drum 1. Therefore, the length of the rotary drum 1 in the longitudinal direction becomes long, thereby requiring a larger installation area. To solve this problem, another embodiment of the dissociating apparatus A of papermaking raw material will be explained hereunder.

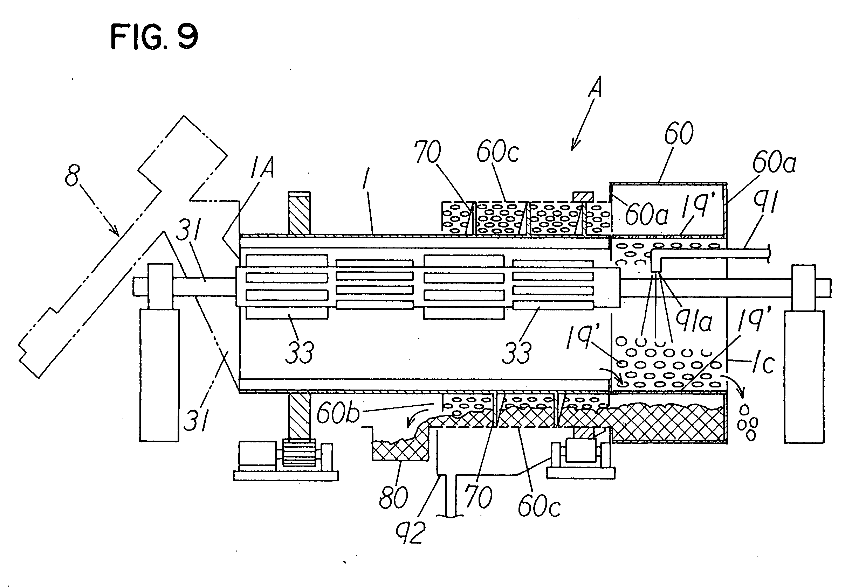

As shown in Fig. 9, the rotary drum 1 has one open end constituting the receiving portion 1A for receiving the papermaking raw material. The other open end of the rotary drum 1 constitutes a discharging portion 1C for discharging the papermaking raw material that is not dissociated in the rotary drum 1. The water supplying device 91 is disposed in the rotary drum 1 for supplying water. A plurality of rotary drum side surface openings 19' (for example, plural openings are formed in the side surface of the rotary drum 1) is formed in the side surface of the rotary drum 1 at a side closer to the other open end (refer to 1C in Fig. 9) than the one open end (refer to 1A in Fig. 9) of the rotary drum 1. The water supplying device 91 has a forward end 91a facing the rotary drum side surface openings 19'.

A cylindrical side surface covering member 60 is disposed to cover the side surface of the rotary drum 1 at a side closer to the other open end of the rotary drum 1 than the one open end thereof. The cylindrical side surface covering member 60 of the present embodiment includes a step portion 60a at the middle thereof. The cylindrical side surface covering member 60 may be formed of a straight cylindrical member.

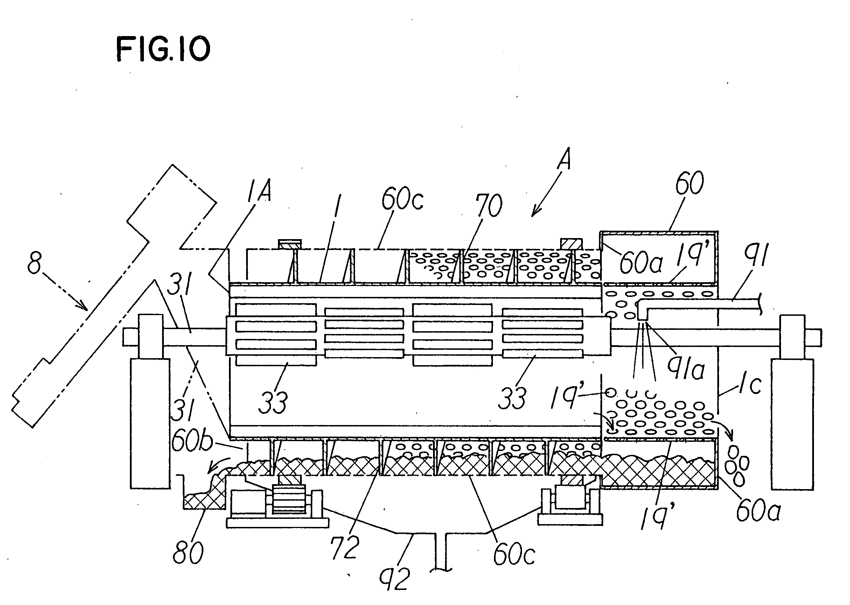

As shown in Figs. 9 and 10, the cylindrical side surface covering member 60 has a closed end 60a at a side closer to the one open end of the rotary drum 1, and an open end 60b at a side opposite to the closed end 60a. The side surface covering member 60 also includes a side surface covering member opening portion 60c having a plurality of openings smaller than the rotary drum side surface openings 19' (for example, holes formed in the side surface of the rotary drum 1). A receiving vessel 92 is provided under the side surface covering member opening 60c for receiving the papermaking raw material passing through the side surface covering member opening portion 60c.

A feeding member 70 is disposed on the side surface of the rotary drum 1 inside the side surface covering member 60, and has a substantially spiral shape to thereby direct the papermaking raw material passing through the rotary drum side surface openings 19' to the open end of the side surface covering member 60. The substantially spiral shape may include a continuous spiral shape as well as a spiral shape with a cutout middle portion, as far as the papermaking raw material in the side surface covering member 60 is guided toward the open end (symbol 60b in Figs. 9 and 10) of the side surface covering member 60 when the rotary drum 1 rotates. The feeding member 70 is provided on the side surface of the rotary drum 1. Alternatively, the feeding member 70 may be provided on the side surface covering member 60.

The papermaking raw material is guided to the side surface covering member 60 through the rotary drum side surface openings 19', and is led to the receiving vessel 92 by the feeding member 70 when the rotary drum 1 rotates. At this time, the papermaking raw material in the rotary drum 1 is separated through the openings 60c disposed in the side surface (circular cylindrical surface) of the side surface covering member 60, and is guided to the receiving vessel 92. A part of the papermaking raw material does not pass through the side surface covering member openings 60c of the side surface covering member 60, and is discharged from the open end 60b of the side surface covering member 60 opposite to the closed end 60a thereof to be received in a vessel 80.

Fig. 10 shows another embodiment of the dissociating apparatus A of the papermaking raw material, wherein the open end 60b of the side surface covering member 60 opposite to the closed end 60a thereof is extended to the receiving portion 1A of the rotary drum 1, so that the receiving vessel 92 has a larger receiving portion. The embodiment shown in Fig. 10 is the same as that shown in Fig. 9 except the extended portion. Therefore, the same symbols are assigned to the same components or parts of the embodiment, and the explanations thereof are omitted (refer to Fig. 10).

The rotary vane 3 is provided inside the rotary drum 1 as shown in Figs. 9 and 10 in the same manner as in the previously described embodiments. The rotary vane 3 is formed, for example, such that the blades 33 are disposed on the outer periphery of the core portion 32 attached to the rotary shaft 31 rotatably supporting both ends of the rotary drum 1.

In the embodiments shown in Figs. 9 and 10, the side surface covering member openings 60c are not provided in the side surface (circular cylindrical surface) of the side surface covering member 60 facing the rotary drum side surface openings 19'. Alternatively, side surface covering member openings (not shown) may be provided in a side surface (circular cylindrical surface) of the side surface covering member 60 facing the rotary drum side surface openings 19', and a receiving vessel (not shown) may be provided under the side surface covering member openings (not shown).

According to the first aspect of the invention, when the rotary drum rotates, the papermaking raw material engages the engaging portions, and the rotary vane hits the papermaking raw material falling from the engaging portions. Therefore, it is possible to increase the impact applied to the papermaking raw material, thereby increasing the efficiency of dissociating the papermaking raw material and reducing a size of the rotary drum.

According to the second aspect of the invention, when the rotary drum rotates, the papermaking raw material engaging the engaging portion located on the inner wall of the rotary drum falls. The rotary vane provided inside the rotary drum hits the papermaking raw material, and the papermaking raw material collides with the inner wall of the rotary drum. Then, the papermaking raw material falls and hits the bottom portion of the inner wall of the rotary drum. The papermaking raw material receives the impact through hitting the rotary vane, colliding with the inner wall of the rotary drum, and hitting the bottom portion of the inner wall of the rotary drum. The rotary vane hits the papermaking raw material upwardly, so that the papermaking raw material falls from a higher position, thereby increasing the impact applied to the papermaking raw material and the efficiency of dissociating the papermaking raw material, and reducing a size of the rotary drum.

According to the third aspect of the invention, the papermaking raw material supplied to the rotary drum contains sufficient water. Therefore, in addition to the effects of the first aspect of the invention, it is possible to increase the efficiency of dissociating the papermaking raw material by the rotary drum as compared with the conventional dissociating apparatus wherein water is sprayed over the papermaking raw material in the rotary drum.

According to the fourth aspect of the invention, the papermaking raw material supplied to the rotary drum contains sufficient water. Therefore, in addition to the effects of the first aspect of the invention, it is possible to increase the efficiency of dissociating the papermaking raw material by the rotary drum as compared with the conventional dissociating apparatus wherein water is sprayed over the papermaking raw material in the rotary drum. The engaging portions disposed on the inner wall of the rotary drum function as the feeding blades for feeding the papermaking raw material from the receiving portion to the discharging portion.

According to the fifth aspect of the invention, the plurality of the first openings is provided in the side surface of the rotary drum at the side closer to the other end of the rotary drum than the one open end of the rotary drum. The first openings constitute the discharging portion for discharging the papermaking raw material in the rotary drum. The water supplying device is provided in the rotary drum for supplying water to the papermaking raw material located in the discharging portion. Thus, in addition to the effects of the third aspect of the invention, the rotary drum dissociates the papermaking raw material together with water as well as the rotary vane of the rotary drum. The good fibers pass through the first openings, and the large foreign materials in the papermaking raw material do not pass through the first openings, so that the discharging portion functions as a screening zone.

According to the sixth aspect of the invention, the water supplying device supplies water to the papermaking raw material located in the projecting portion so that the papermaking raw material is diluted. Therefore, in addition to the effects of the fifth aspect, it is possible to effectively separate the foreign materials from the good fibers when the rotary drum rotates as the papermaking raw material is diluted.

According to the seventh aspect of the invention, the second openings of the screening device have the size smaller than that of the first openings of the rotary drum. Therefore, in addition to the effects of the first aspect, the large foreign materials are removed by the first openings of the rotary drum, thereby preventing the agitating member of the screening device from damaging due to the large foreign matters.

According to the eighth aspect of the invention, in addition to the effects of the first aspect, the part of the papermaking raw material passes through the third openings of the second rotary drum and does not pass through the screening device. The part of the papermaking raw material passes through the screening apparatus one more time, thereby obtaining a larger amount of the good fibers.

According to the ninth aspect of the invention, the plurality of the rotary drum side surface openings is formed in the side surface of the rotary drum at the side closer to the one end of the rotary drum than the other end thereof. The substantially cylindrical side surface covering member is disposed to cover the side surface of the rotary drum at the side closer to the other end of the rotary drum than the one end thereof. The side surface covering member includes the side surface covering member openings having the plurality of the openings smaller than the rotary drum side surface,openings. The water supplying device is disposed in the rotary drum, so that the rotary drum has the short length in the longitudinal direction. It is possible to dissociate the papermaking raw material in the rotary drum as well as in the side surface covering member. Further, the papermaking raw material passes through the rotary drum side surface openings and the side surface covering member openings, thereby improving the efficiency of separating the papermaking raw material.

While the invention has been explained with reference to the specific embodiments of the invention, the explanation is illustrative and the invention is limited only by the appended claims.

## Claims

1. A dissociating apparatus of a papermaking raw material, comprising:
a rotary drum rotatably and laterally arranged for receiving the papermaking raw material therein and having engaging portions formed on an inner surface thereof, said engaging portions engaging the papermaking raw material to carry the papermaking raw material from a bottom side to an upper side inside the rotary drum upon rotation of the rotary drum, and
a rotary vane rotatably situated inside the rotary drum to extend along the rotary drum, said rotary vane hitting the papermaking raw material falling from the engaging portions upon rotation of the rotary drum.

2. A dissociating apparatus of a papermaking raw material according to claim 1, wherein said rotary drum has a receiving portion at one end thereof for receiving the papermaking raw material, and a discharging portion formed in a side surface of the first rotary drum at a side opposite to the one end of the rotary drum and having a plurality of first openings for discharging the papermaking raw material from the rotary drum.

3. A dissociating apparatus of a papermaking raw material according to claim 2, wherein said rotary drum is formed of an elongated body having a diameter smaller than a distance between the receiving portion and the discharging portion, said rotary drum being disposed such that a longitudinal direction of the elongated body is aligned in a horizontal direction and the discharging portion is located lower than the receiving portion.

4. A dissociating apparatus of a papermaking raw material according to claim 2, further comprising an agitator for agitating the papermaking raw material with water before the papermaking raw material is received in the rotary drum, and a transferring device for transferring the papermaking raw material from the agitator to the receiving portion of the rotary drum.

5. A dissociating apparatus of a papermaking raw material according to claim 4, wherein said engaging portions include feeding blades for feeding the papermaking raw material from the receiving portion to the discharging portion.

6. A dissociating apparatus of a papermaking raw material according to claim 2, further comprising a water supplying device disposed at the discharging portion inside the rotary drum for supplying water to the papermaking raw material.

7. A dissociating apparatus of a papermaking raw material according to claim 6, wherein said rotary drum further includes a projecting portion projecting outwardly and located between the rotary vane and the discharging portion, said water supplying device being disposed in the projecting portion.

8. A dissociating apparatus of a papermaking raw material according to claim 2, further comprising a screening device for receiving the papermaking raw material discharged from the discharging portion, said screening device having an agitating member for agitating the papermaking raw material and a screen having a plurality of second openings for discharging the papermaking raw material therethrough, said second openings having sizes smaller than those of the first openings.

9. A dissociating apparatus of a papermaking raw material according to claim 8, further comprising another rotary drum having a plurality of third openings in a sidewall thereof for separating a foreign material from the papermaking raw material remaining in the screening device, said third openings having sizes smaller than those of the first openings and larger than those of the second openings so that the papermaking raw material passing through the third openings is guided to the screening device.

10. A dissociating apparatus of a papermaking raw material according to claim 2, further comprising a side surface covering member formed at a side closer to the receiving portion of the first rotary drum than the discharging portion thereof for covering the side surface of the rotary drum, said side surface covering member having a closed portion at a side opposite to the one end and an open portion at a side of the one end, said side surface covering member including a plurality of openings having sizes smaller than those of the first openings; a feeding member formed on the rotary drum or the side surface covering member and having a substantially spiral shape for feeding the papermaking raw material passing through the first openings toward the open portion of the side surface covering member; and a water supplying device for supplying water to the papermaking raw material.

11. A method for dissociating a papermaking raw material comprising:
providing the papermaking raw material in a rotary drum disposed horizontally and having engaging portions on an inner surface thereof,
rotating the rotary drum so that the papermaking raw material located at a lower side of the rotary drum engages the engaging portions to be transferred to an upper side of the rotary drum, and falls from the engaging portions,
rotating a rotary vane disposed inside the rotary drum to hit the papermaking raw material falling from the engaging portions so that the papermaking raw material collides with the inner wall of the rotary dram and falls on a bottom of the inner surface of the rotary drum to be dissociated.

12. A method for dissociating a papermaking raw material according to claim 11, wherein the rotary vane is disposed horizontally parallel to the rotary drum, and is rotated faster than the rotary drum.
